# FASCICULE DE BREVET EUROPEEN

(11) **EP 2 170 682 B1**
(45) Date de publication et mention de la délivrance du brevet: **16.05.2012**
(21) Numéro de dépôt: 08806130.4
(22) Date de dépôt: 30.06.2008
(51) Int. Cl.: B62D 53/08

(54) **PROCEDE D'ASSISTANCE AU DEMARRAGE EN COTE**
AUFWÄRTSSTARTHILFEVERFAHREN
METHOD FOR ASSISTING WITH HILL STARTS

(30) Priorité: 02.08.2007 FR 0705676
(43) Date de publication de la demande: 07.04.2010
(73) Titulaire: Renault S.A.S., 92100 Boulogne-Billancourt (FR)
(72) Inventeur: CAYOL, Olivier, F-78000 Versailles (FR); DE RINALDIS, Alessandro, F-75018 Paris (FR); DESFRICHES, Christophe, F-27120 Pacy-sur-Eure (FR); LEMINOUX, Gérald, F-78980 Longnes (FR); MALLET, Mickaël, F-78180 Montigny-le-Bretonneux (FR)
(86) Numéro de dépôt international: PCT/FR2008/051204
(87) Numéro de publication internationale: WO 2009/019353

(56) Documents cités:
- DE-A1- 3 618 532
- DE-A1- 19 957 269
- DE-A1-102006 000 422

## Description

La présente invention concerne le domaine de l'assistance au démarrage en côte, autrement appelé décollage, pour véhicule automobile.

Plus précisément, l'invention concerne un procédé d'assistance au démarrage en côte pour véhicule automobile retenu au préalable en stationnement par un frein, le procédé comprenant les étapes consistant à :
- mesurer l'inclinaison du véhicule, et
- relâcher automatiquement le frein.

Le problème à résoudre pour de tels procédés est d'éviter un éventuel calage du moteur. En effet, pour certains moteurs, en particulier dits à faible couple, il est possible que l'écart entre le couple moteur réel, délivré en particulier lors du démarrage du véhicule automobile, et le couple moteur nécessaire au décollage ne soit pas compensable (typiquement en appuyant sur l'accélérateur).

Pour résoudre un tel problème il est connu de mettre en oeuvre de multiples capteurs sur le véhicule automobile.

Toutefois, l'utilisation de capteurs, outre leur coût intrinsèque, nécessite parallèlement une gestion électronique parfois complexe des données fournies par ces capteurs, ce qui peut alourdir en outre notamment les temps de calcul de l'unité de contrôle électronique (ECU). DE19957269 décrit un appareil et une procède pour un démarrage d'un véhicule en côte.

La présente invention a pour but de remédier à ces inconvénients en proposant une solution simple à mettre en oeuvre et visant à minimiser le nombre de capteurs nécessaires, donc en particulier le coût de mise en oeuvre d'un tel procédé.

Avec cet objectif en vue, le dispositif selon l'invention, par ailleurs conforme au préambule cité ci-avant, est essentiellement caractérisé en ce qu'il comprend en outre les étapes consistant à :
- établir au préalable une cartographie entre le couple moteur et le régime moteur,
- définir dans la cartographie une zone autorisée pour un démarrage en côte et une zone interdite pour un tel démarrage,
- fournir une valeur du régime moteur du véhicule,
- fournir une valeur du couple moteur du véhicule,
- en déduire les coordonnées du point de fonctionnement du moteur dans la cartographie, et
- ne relâcher automatiquement le frein que si les coordonnées du point de fonctionnement sont comprises dans la zone autorisée de la cartographie.

Grâce à cette caractéristique, seul un capteur d'inclinaison du véhicule automobile peut être nécessaire.

D'autres caractéristiques et avantages de la présente invention apparaîtront plus clairement à la lecture de la description suivante donnée à titre d'exemple illustratif et non limitatif et faite en référence aux figures annexées dans lesquelles :
- la figure 1 illustre un mode de réalisation d'une cartographie selon l'invention, et
- la figure 2 illustre un mode de réalisation du procédé selon l'invention.

Pour illustrer le principe de l'invention, on considère un véhicule automobile bloqué au préalable en stationnement par un frein.

Le frein peut être un frein de parking ou le frein à pied du véhicule automobile. C'est-à-dire que l'invention peut être mise en oeuvre quel que soit le type de moteur, quelle que soit la puissance du moteur, et surtout quel que soit le type de boîte de vitesses.

Lors d'un démarrage en côte, il est de plus en plus souhaitable d'obtenir une assistance audit démarrage en côte. Dans le cas d'un véhicule stationné dans une montée (pente positive) et devant se mouvoir en avant, il est possible, sans assistance, que le véhicule automobile en fait recule pendant un instant correspondant à l'écart entre le moment où le conducteur lâche le frein et le moment où le couple du moteur est suffisant pour entraîner le véhicule automobile, et ce d'autant plus que la pente est grande et que le véhicule automobile est chargé, donc que sa masse est importante.

En outre, il peut arriver, notamment pour un moteur à faible couple moteur, que celui-ci cale. Ce calage est du à l'incapacité du moteur à délivrer le couple nécessaire au décollage du véhicule automobile, combinée à une baisse de régime dudit moteur.

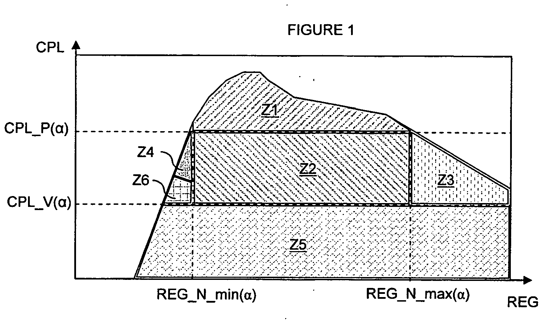

Pour résoudre ces problèmes avec un minimum de capteurs, selon l'invention, on établit une cartographie du moteur. Une telle cartographie est illustrée figure 1, et correspond au couple moteur CPL délivré en fonction du régime moteur REG.

Une telle cartographie est obtenue par exemple sur banc moteur avant la mise en service du véhicule, ou établie lors de phases de roulage du véhicule automobile. Sa forme et ses valeurs dépendent du type de moteur, aussi les unités du graphique ne sont-elles pas indiquées sur la figure 1.

Pour un moteur donné, l'enveloppe de sa cartographie, telle qu'illustrée sur la figure 1, est indépendante de la masse du véhicule et de la pente sur laquelle celui-ci est susceptible de se trouver.

Une étape du procédé selon l'invention consiste à fournir une valeur, de préférence instantanée, du régime moteur du véhicule. Cette étape est avantageusement mise en oeuvre par la mesure dudit régime, par tout moyen connu de l'homme du métier.

Une autre étape du procédé selon l'invention consiste à fournir une valeur, de préférence instantanée, du couple moteur du véhicule. Cette étape est avantageusement mise en oeuvre par une estimation dudit couple, par tout moyen connu de l'homme du métier, dont par exemple par mesure des temps d'injection.

Une fois les valeurs de couple CPL (t) et de régime REG(t) établies en un instant t donné, une autre étape du procédé selon l'invention consiste à en déduire les coordonnées du point de fonctionnement au temps t du moteur dans la cartographie.

Les coordonnées du point de fonctionnement au temps t sont avantageusement établies en temps réel.

Selon l'invention, une étape consiste à définir dans la cartographie une zone autorisée et une zone interdite. Ces zones sont décrites ultérieurement et correspondent en l'espèce sur la figure 1 aux sous-zones Z1, Z2, Z3 et Z4 pour la zone autorisée, et à la sous-zone Z5 et Z6 pour la zone interdite.

La zone autorisée correspond à la zone dans laquelle le moteur, par le conducteur du véhicule automobile ou par des moyens de contrôle à cet effet, est capable d'atteindre un régime moteur lui permettant de délivrer un couple suffisant pour le décollage, c'est-à-dire suffisant pour vaincre la pente et les dispersions (dispersion du capteur d'inclinaison, de masse du véhicule, du régime moteur et du couple moteur).

Une fois obtenues, les coordonnées du point de fonctionnement permettent alors de positionner celui-ci dans la cartographie, et d'en déduire si ce point est positionné dans la zone autorisée ou dans la zone interdite.

Si les coordonnées du point de fonctionnement sont comprises dans la zone autorisée de la cartographie, alors on relâche automatiquement le frein, par exemple des moyens de commande peuvent émettre un signal à cet effet.

Il est à noter que dans un mode de réalisation, le véhicule automobile est équipé de frein à pied et de moyens de contrôle dudit frein à pied configurés pour maintenir le serrage dudit frein, donc retenir le véhicule automobile, entre le moment où le conducteur lâche ledit frein et le moment où le couple du moteur est suffisant pour entraîner le véhicule automobile. Dans ce mode de réalisation, les moyens de commande pilotent les moyens de contrôle dudit frein à pied.

Grâce à l'invention, il est possible de n'utiliser qu'un seul capteur, permettant de mesurer l'inclinaison du véhicule.

La mesure de l'inclinaison du véhicule, c'est-à-dire de la pente α sur laquelle celui-ci se situe, permet avantageusement de définir la zone autorisée et la zone interdite, de manière dynamique, comme décrit ci-après.

Grâce à l'invention, il est possible de mettre en oeuvre une assistance au décollage, sans mesurer ni estimer la masse du véhicule automobile.

Or, la masse d'un véhicule automobile influe sur le couple nécessaire à délivrer par la moteur pour permettre le décollage.

Ainsi, de manière schématique, plus une pente est forte et plus la masse du véhicule automobile est importante, plus le couple moteur à délivrer pour permettre le décollage doit être important.

Pour pouvoir s'affranchir de la connaissance de la masse du véhicule, la zone autorisée et la zone interdite sont avantageusement définies comme décrit ci-dessous.

En effet, lors de l'établissement de la cartographie, en particulier de son enveloppe, par exemple sur banc d'essai, il n'est pas possible de savoir quel sera la masse du véhicule automobile en charge, celle-ci dépendant du nombre et de la masse d'éventuels passagers, ainsi que d'éventuels bagages.

Toutefois, on définit généralement de manière réglementaire une masse minimale du véhicule automobile, dit poids à vide, ainsi qu'une masse maximale en charge autorisée, dite à plein. Ces masses sont connues pour un véhicule automobile donné.

Selon l'invention, on peut donc définir un couple de décollage maximal CPL_P(α) et un couple de décollage minimal CPL_V(α), illustrés sur la figure 1.

Le couple de décollage maximal CPL_P(α) correspond au couple moteur nécessaire pour faire décoller un véhicule automobile à plein.

Le couple de décollage minimal CPL_V(α) correspond au couple moteur nécessaire pour faire décoller un véhicule automobile à vide.

Comme vu précédemment, ces deux couples moteurs CPL_P(α) et CPL_V(α) dépendent de la pente α.

Ainsi pour deux pentes α1 et α2 telles que α2> α1, on a CPL_P(α2)>CPL_P(α1) et CPL_V(α2)>CPL_V(α1).

La mesure de la pente α, c'est-à-dire de l'inclinaison du véhicule, permet de déterminer les valeurs des seuils de couple de décollage à plein CPL_P (α) et de couple de décollage à vide CPL_V(α), qui auront été au préalable étalonnées.

Grâce à ces valeurs seuils, on peut avantageusement définir de manière dynamique la zone autorisée et la zone interdite dans la cartographie.

A cet effet, typiquement, la zone interdite comprend une première sous-zone (Z5 figure 1) correspondant à toute valeur de couple moteur délivré inférieure au couple de décollage à vide CPL_V(α), quel que soit le régime moteur.

Si les coordonnées du point de fonctionnement correspondent à un point de la sous-zone Z5, alors on considère selon l'invention que le couple moteur délivré est insuffisant pour le décollage à vide et que, dans ces conditions, le frein ne doit pas être relâché automatiquement.

Avantageusement, on peut ainsi subdiviser la zone autorisée et/ou la zone interdite en une pluralité de sou-zones.

A cet effet, la zone de décollage autorisé comprend notamment une plage comprenant tout point de fonctionnement dont les coordonnées sont telles que le couple moteur délivré est supérieur au couple de décollage à vide CPL_V(α), et dont le régime moteur est supérieur au régime moteur nominal minimal REG_N_min(α) (figure 1).

Cette plage correspond aux sous-zones Z1, Z2 et Z3 sur la figure 1.

Plus précisément, la zone autorisée peut ainsi comprendre une première sous-zone Z1 dans laquelle le couple moteur est supérieur au couple de décollage à plein CPL_P(α) correspondant à la somme du couple de décollage à vide CPL_V(α) et du couple de dispersions CPL_P(α)-CPL_V(α).

L'intersection de l'enveloppe de la cartographie et de la valeur du couple de décollage à plein CPL_P(α) définit deux régimes moteurs : un régime moteur nominal maximal REG_N_max(α) et un régime moteur nominal minimal REG_N_min(α).

Le régime moteur nominal minimal REG_N_min(α) est le régime moteur en deçà duquel le couple moteur est inférieur au couple de décollage à plein CPL_P(α).

Le régime moteur nominal maximal REG_N_max (α) est le régime moteur au-delà duquel le couple moteur délivré devient inférieur au couple de décollage à plein CPL_P(α).

Comme vu précédemment, le couple de décollage à plein CPL_P(α) et le couple de décollage à vide CPL_V(α) dépendent avantageusement de la pente α. Par conséquent, le régime moteur nominal minimal REG_N_min (α) et le régime moteur nominal maximal REG_N_max (α) dépendent de même avantageusement de la pente α.

La zone autorisée peut comprendre une deuxième sous-zone Z2 dans laquelle le couple moteur est supérieur au couple de décollage à vide CPL_V(α) (et inférieur au couple de décollage à plein CPL_P(α)), et le régime moteur compris entre le régime moteur nominal minimal REG_N_min (α) et le régime moteur nominal maximal REG_N_max (α).

La zone autorisée peut comprendre une troisième sous-zone Z3 dans laquelle le régime moteur est supérieur au régime nominal maximal REG_N_max (α), et le couple moteur est supérieur au couple de décollage à vide CPL_V(α).

Cette troisième sous-zone Z3 fait partie de la zone autorisée car même si le couple moteur délivré est dans cette sous-zone inférieur au couple de décollage à plein CPL_P(α), une simple baisse du régime moteur, par le conducteur du véhicule automobile ou de manière pilotée, permet aisément de retrouver un régime moteur compris entre le régime moteur nominal minimal REG_N_min(α) et le régime moteur nominal maximal REG_N_max (α) correspondant à la première Z1 ou à la deuxième sous-zone Z2, donc à la capacité de délivrer un couple moteur suffisant pour le décollage du véhicule automobile.

La zone autorisée peut aussi comprendre une quatrième sous-zone Z4 dans laquelle le couple moteur est supérieur à la somme du couple de décollage à vide CPL_V(α), du couple d'augmentation de régime, et du couple de limite de déplacement, et dans laquelle le régime moteur est inférieur au régime moteur nominal minimal REG_N_min(α).

Dans cette sous-zone Z4, bien que le régime moteur soit inférieur au régime moteur nominal minimal REG_N_min(α), on considère que, comme le couple moteur délivré est supérieur à la somme du couple de décollage à vide CPL_V(α), du couple d'augmentation de régime, et du couple de limite de déplacement, le couple nécessaire pour que le régime moteur atteigne le régime moteur nominal minimal REG_N_min (α) est susceptible d'être délivré par le moteur.

En revanche, si le couple moteur délivré est inférieur à la somme du couple de décollage à vide CPL_V (α), du couple d'augmentation de régime, et du couple de limite de déplacement ; et le régime moteur est inférieur au régime moteur nominal minimal REG_N_min (α), le couple nécessaire pour que le régime moteur atteigne le régime moteur nominal minimal REG_N_min (α) n'est pas susceptible d'être délivré par le moteur et on considère que le décollage ne doit pas être autorisé (sous-zone Z6) car le véhicule automobile est susceptible de caler.

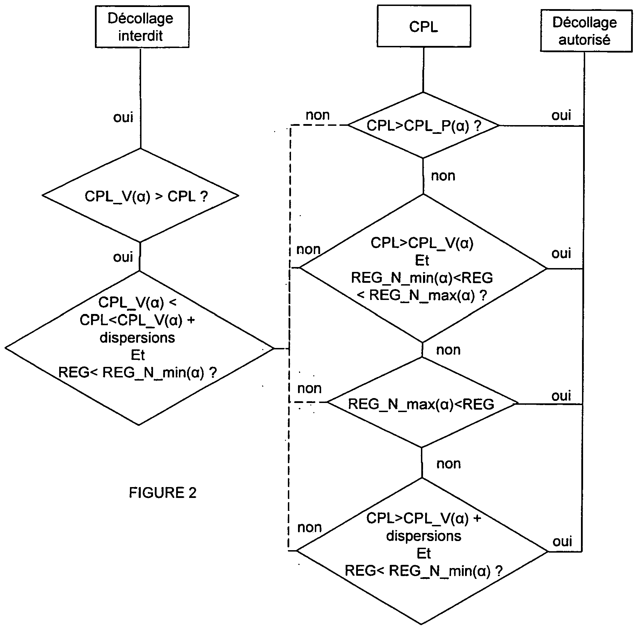

L'invention peut être illustrée également de manière synoptique sur la figure 2.

La figure 2 illustre un mode de réalisation du procédé selon l'invention, en particulier sous forme d'algorithme.

L'algorithme selon l'invention est avantageusement mis en oeuvre par un programme d'ordinateur. Le programme d'ordinateur selon l'invention comprend des instructions de code de programme pour l'exécution des étapes du procédé tel que défini ci-avant lorsque ledit programme est exécuté sur un ordinateur.

Dans un première étape, on fournit une valeur du couple moteur CPL.

Ensuite, dans une deuxième étape, on compare la valeur du couple moteur au couple de décollage à plein CPL_P (α). Si la différence est positive, le décollage est autorisé 100. Cette étape permet de déterminer si les coordonnées du point de fonctionnement sont dans la sous-zone Z1.

Sinon, on calcule si le couple moteur CPL est supérieur au couple de décollage à vide CPL_V (α), et si le régime moteur est compris entre le régime moteur nominal minimal REG_N_min (α) et le régime moteur nominal maximal REG_N_max (α).

Dans l'affirmative, le décollage est autorisé. Cette étape permet de déterminer si les coordonnées du point de fonctionnement sont dans la sous-zone Z2.

Dans la négative, toujours avec CPL > CPL_V (α), on compare le régime REG avec le régime moteur nominal maximal REG_N_max (α).

Si le régime REG > REG_N_max (α) alors le décollage est autorisé. Cette étape permet de déterminer si les coordonnées du point de fonctionnement sont dans la sous-zone Z3.

Si le régime REG < REG_N_min (α), et que le couple moteur CPL est supérieur à la somme du couple de décollage à vide CPL_V (α), du couple d'augmentation de régime, et du couple de limite de déplacement, alors le décollage est autorisé. Cette étape permet de déterminer si les coordonnées du point de fonctionnement sont dans la sous-zone Z4.

Si le couple moteur délivré CPL est inférieur à la somme du couple de décollage à vide CPL_V (α), du couple d'augmentation de régime, et du couple de limite de déplacement ; et si REG < REG_N_min (α), le décollage est interdit. Cette étape permet de déterminer si les coordonnées du point de fonctionnement sont dans la sous-zone Z6.

De même, si le couple moteur délivré CPL est inférieur au couple de décollage à vide CPL_V (α), le décollage est interdit. Cette étape permet de déterminer si les coordonnées du point de fonctionnement sont dans la sous-zone Z5.

Les étapes mentionnées ci-dessus ne sont pas obligatoirement séquentielles. Dans le cas où elles sont séquentielles, d'autres séquences pour l'ordre des étapes sont possibles.

## Revendications

1. Procédé d'assistance au démarrage en côte pour véhicule automobile retenu au préalable en stationnement par un frein, le procédé comprenant les étapes consistant à
- mesurer l'inclinaison (α) du véhicule, et
- relâcher automatiquement le frein,
**caractérisé en ce que** le procédé comprend en outre les étapes consistant à :
- établir au préalable une cartographie entre le couple moteur et le régime moteur,
- définir dans la cartographie une zone autorisée pour un démarrage en côte (Z1 à Z4) et une zone interdite pour un tel démarrage (Z5, Z6),
- fournir une valeur du régime (REG) moteur du véhicule,
- fournir une valeur du couple (CPL) moteur du véhicule,
- en déduire les coordonnées du point de fonctionnement (REG, CPL) du moteur dans la cartographie, et
- ne relâcher automatiquement le frein que si les coordonnées du point de fonctionnement sont comprises dans la zone autorisée de la cartographie.

2. Procédé selon la revendication 1, dans lequel l'étape de relâchement automatique du frein n'est mise en oeuvre que si au moins la valeur du couple moteur (CPL) est supérieure ou égale à un couple de décollage à vide (CPL_V) du véhicule automobile.

3. Procédé selon la revendication 2, dans lequel le couple de décollage à vide (CPL_V(α)) du véhicule automobile est défini en fonction de l'inclinaison (α) mesurée du véhicule.

4. Procédé selon l'une quelconque des revendications précédentes, dans lequel la zone autorisée comprend une première sous-zone (Z1) dans laquelle le couple moteur (CPL) est supérieur à un couple de décollage à plein (CPL_P) correspondant à la somme du couple de décollage à vide (CPL_V) et d'un couple de dispersions.

5. Procédé selon la revendication 4, dans lequel le couple de décollage à plein (CPL_P (α)) du véhicule automobile est défini en fonction de l'inclinaison (α) mesurée du véhicule.

6. Procédé selon l'une quelconque des revendications précédentes, dans lequel la zone autorisée comprend une deuxième sous-zone (Z2) dans laquelle :
- le couple moteur (CPL) est supérieur au couple de décollage à vide (CPL_V (α)), et
- le régime moteur (REG) est compris entre un régime moteur nominal minimal (REG_N_min (α)) et un régime moteur nominal maximal (REG_N_max (α)).

7. Procédé selon l'une quelconque des revendications précédentes, dans lequel la zone autorisée comprend une troisième sous-zone (Z3) dans laquelle :
- le régime moteur (REG) est supérieur à un/au régime nominal maximal (REG_N_max (α)), et
- le couple moteur (CPL) est supérieur au couple de décollage à vide (CPL_V(α)).

8. Procédé selon l'une quelconque des revendications précédentes, dans lequel la zone autorisée comprend une quatrième sous-zone (Z4) dans laquelle :
- le couple moteur (CPL) est supérieur à la somme du couple de décollage à vide (CPL_V), d'un couple d'augmentation de régime, et d'un couple de limite de déplacement, et
- le régime moteur (REG) est inférieur à un/au régime moteur nominal minimal (REG_N_min (α)).

## Claims

1. Method for assisting with a hill start for a motor vehicle previously held stationary by a brake, the method comprising the steps consisting in:
- measuring the inclination (α) of the vehicle,
and
- automatically releasing the brake,
**characterized in that** the method also comprises the steps consisting in:
- previously establishing a chart between the engine torque and the engine speed,
- defining in the chart a zone authorized for a hill start (Z1 to Z4) and a zone forbidden for such a start (Z5, Z6),
- providing a value of the engine speed (REG) of the vehicle,
- providing a value of the engine torque (CPL) of the vehicle,
- deducing therefrom the coordinates of the point of operation (REG, CPL) of the engine in the chart, and
- not automatically releasing the brake unless the coordinates of the point of operation are in the authorized zone of the chart.

2. Method according to Claim 1, wherein the step of automatically releasing the brake is applied only if at least the value of the engine torque (CPL) is greater than or equal to an unladen take-off torque (CPL_V) of the motor vehicle.

3. Method according to Claim 2, wherein the unladen take-off torque (CPL_V(α)) of the motor vehicle is defined according to the measured inclination (α) of the vehicle.

4. Method according to any one of the preceding claims, wherein the authorized zone comprises a first subzone (Z1) in which the engine torque (CPL) is greater than a laden take-off torque (CPL_P) corresponding to the total of the unladen take-off torque (CPL_V) and a dispersion torque.

5. Method according to Claim 4, wherein the laden take-off torque (CPL_P(α)) of the motor vehicle is defined according to the measured inclination (α) of the vehicle.

6. Method according to any one of the preceding claims, wherein the authorized zone comprises a second subzone (Z2) in which:
- the engine torque (CPL) is greater than the unladen take-off torque (CPL_V(α)), and
- the engine speed (REG) is between a minimal nominal engine speed (REG_N_min(α)) and a maximal nominal engine speed (REG_N_max(α)).

7. Method according to any one of the preceding claims, wherein the authorized zone comprises a third subzone (Z3) in which:
- the engine speed (REG) is greater than a/the maximal nominal speed (REG_N_max(α)), and
- the engine torque (CPL) is greater than the unladen take-off torque (CPL_V(α)).

8. Method according to any one of the preceding claims, wherein the authorized zone comprises a fourth subzone (Z4) in which:
- the engine torque (CPL) is greater than the total of the unladen take-off torque (CPL_V), a speed-increase torque, and a movement-limit torque, and
- the engine speed (REG) is less than a/the minimal nominal engine speed (REG_N_min(α)).

## Patentansprüche

1. Berganfahrhilfe-Verfahren für ein Kraftfahrzeug, das vorher durch eine Bremse geparkt gehalten wird, wobei das Verfahren die Schritte enthält, die darin bestehen:
- die Neigung (α) des Fahrzeugs zu messen, und
- die Bremse automatisch zu lösen,
**dadurch gekennzeichnet, dass** das Verfahren außerdem die Schritte enthält, die darin bestehen:
- vorab ein Kennfeld zwischen dem Motordrehmoment und der Motordrehzahl zu erstellen,
- in dem Kennfeld eine erlaubte Zone für ein Berganfahren (Z1 bis Z4) und eine verbotene Zone für ein solches Anfahren (Z5, Z6) zu definieren,
- einen Wert der Motordrehzahl (REG) des Fahrzeugs zu liefern,
- einen Wert des Motordrehmoments (CPL) des Fahrzeugs zu liefern,
- daraus die Koordinaten des Betriebspunkts (REG, CPL) des Motors in dem Kennfeld abzuleiten, und
- die Bremse nur dann automatisch zu lösen, wenn die Koordinaten des Betriebspunkts sich in der erlaubten Zone des Kennfelds befinden.

2. Verfahren nach Anspruch 1, bei dem der Schritt des automatischen Lösens der Bremse nur durchgeführt wird, wenn mindestens der Wert des Motordrehmoments (CPL) höher als ein oder gleich einem Leerlaufstartmoment (CPL_V) des Kraftfahrzeugs ist.

3. Verfahren nach Anspruch 2, bei dem das Leerlaufstartmoment (CPL_V(α)) des Kraftfahrzeugs abhängig von der gemessenen Neigung (α) des Fahrzeugs definiert wird.

4. Verfahren nach einem der vorhergehenden Ansprüche, bei dem die erlaubte Zone eine erste Unterzone (Z1) enthält, in der das Motordrehmoment (CPL) höher als ein Vollgasstartmoment (CPL_P) ist, das der Summe des Leerlaufstartmoments (CPL_V) und eines Moments von Streuungen entspricht.

5. Verfahren nach Anspruch 4, bei dem das Vollgasstartmoment (CPL_P(α)) des Kraftfahrzeugs abhängig von der gemessenen Neigung (α) des Fahrzeugs definiert wird.

6. Verfahren nach einem der vorhergehenden Ansprüche, bei dem die erlaubte Zone eine zweite Unterzone (Z2) enthält, in der:
- das Motordrehmoment (CPL) höher als das Leerlaufstartmoment (CPL_V(α)) ist, und
- die Motordrehzahl (REG) zwischen einer minimalen Nenn-Motordrehzahl (REG_N_min(α)) und einer maximalen Nenn-Motordrehzahl (REG_N_max(α)) liegt.

7. Verfahren nach einem der vorhergehenden Ansprüche, bei dem die erlaubte Zone eine dritte Unterzone (Z3) enthält, in der:
- die Motordrehzahl (REG) höher als eine/als die maximale Nenndrehzahl (REGN_ max(α)) ist, und
- das Motordrehmoment (CPL) höher als das Leerlaufstartmoment (CPL_V(α)) ist.

8. Verfahren nach einem der vorhergehenden Ansprüche, bei dem die erlaubte Zone eine vierte Unterzone (Z4) enthält, in der:
- das Motordrehmoment (CPL) höher als die Summe des Leerlaufstartmoments (CPL_V), eines Drehzahlerhöhungsmoments und eines Bewegungsgrenzmoments ist, und
- die Motordrehzahl (REG) geringer als eine/als die minimale Nenn-Motordrehzahl (REG_N_min(α)) ist.
